# EUROPÄISCHE PATENTSCHRIFT

(11) **EP 2 316 315 B1**
(45) Veröffentlichungstag und Bekanntmachung des Hinweises auf die Patenterteilung: **04.09.2013**
(21) Anmeldenummer: 10014112.6
(22) Anmeldetag: 28.10.2010
(51) Int. Cl.: A47J 37/06

(54) **Grillrost**
Barbecue grill
Grill

(30) Priorität: 28.10.2009 DE 202009014563 U
(43) Veröffentlichungstag der Anmeldung: 04.05.2011
(73) Patentinhaber: Ulusu, Cüneyt, 41564 Kaarst (DE)
(72) Erfinder: Ulusu, Cüneyt, 41564 Kaarst (DE)
(74) Vertreter: Dammertz, Ulrich

(56) Entgegenhaltungen:
- WO-A1-2004/041041
- DE-A1- 2 154 486
- DE-A1- 19 633 296
- US-A1- 2002 066 373

## Beschreibung

Die Erfindung betrifft einen Grillrost mit einer Mehrzahl von Grillroststangen, die voneinander beabstandet lösbar an einem Rahmen angebracht sind.

Herkömmliche Grillroste sind in einer Vielzahl von Ausführungsformen bekannt. Üblicherweise umfassen solche Grillroste parallel zueinander verlaufende Grillstangen, die auf einem Rahmen oder dergleichen angeordnet sind. Der Grillrost wird über einer Feuerstelle oder dergleichen positioniert, so dass von der Feuerstelle aufsteigende Hitze Grillgut, das auf die Grillroste aufgelegt wird, geeignet garen kann.

Bei einem Grillrost mit voneinander beabstandeten Grillroststangen und entsprechenden Lücken zwischen diesen Grillroststangen tritt das Problem auf, dass vom Grillgut abtropfendes Fett auf die unterhalb des Grillrostes befindliche Feuerstelle trifft, was zu einer unerwünschten Verbrennung dieses Fetts und einer entsprechenden Bildung von gesundheitsgefährdenden Dämpfen führt. Zur Vermeidung eines solchen unkontrollierten Tropfens von Fett sieht DE 295 05 466 U 1 sogenannte Fettablaufrinnen vor, die unterhalb der Grillroststangen angeordnet sind. Die räumliche Anordnung dieser Fettablaufrinnen gewährleistet jedoch kein lückenloses Auffangen von herabtropfendem Fett. Dem gleichen Nachteil unterliegt der Grillrost gemäß DE 29 49 107, bei dem Fettablaufrinnen unterhalb von Grillroststangen angeordnet sind, jedoch das Fett ggf. nicht vollständig auffangen können.

Aus WO 2004/041041 A1 ist ein Grillrost bekannt, bei dem die Grillroststangen an beiden Seiten jeweils eine Fettablaufrinne aufweisen. Die Enden dieser Fettablaufrinnen sind mit einer Fettauffangwanne aufgerichtet. Somit kann Fett, was von Fleischstücken oder dergleichen von dem Grillrost herabtropft, mittels der Fettablaufrinnen in einer Fettauffangwanne aufgefangen werden.

DE 88 04 071 zeigt einen Grillrost, bei dem in einer oberen ersten Ebene Grillroststäbe und unterhalb davon in einer unteren zweiten Ebene eine Mehrzahl von Fettablaufrinnen angeordnet sind. Diese Fettablaufrinnen sollen vermeiden, dass vom Grillgut herabtropfendes Fett in die heiße Feuerstelle gelangt und dort verbrennt. Jedoch unterliegt ein solcher Grillrost dem Nachteil, dass die Handhabung von separaten Grillroststangen und Fettablaufrinnen aufwendig ist.

DE 21 54 486 zeigt einen Grillrost mit einer Mehrzahl von lösbaren Roststangen, die jeweils in "S"-Form ausgebildet sind. Diese Roststangen sind nebeneinander derart angeordnet, dass ein unterer Schenkel einer Roststange mit seiner konkaven Ausbauchung jeweils in Lotrichtung unterhalb einer benachbarten bzw. daran angrenzenden Roststange angeordnet ist. Somit ist gewährleistet, dass Fett, was von einer Oberseite einer Roststange herabtropfen sollte, in die darunter befindliche konkave Ausbauchung einer benachbarten Roststange herabtropft.

Aus DE 196 33 296 A1 ist ein Grillrost mit voneinander beabstandeten Grillroststangen bekannt. Diese Grillroststangen sind alternierend von ersten Grillstäben und von zweiten Grillstäben ausgebildet, an denen seitlich jeweils Fettablaufrinnen ausgebildet sind. Die einander zugewandten Fettablaufrinnen von benachbarten Grillstäben weisen in der Höhe voneinander einen Abstand und eine Überlappung auf. Die Grillroststangen in Form der genannten ersten und zweiten Grillstäbe sind an einem Rahmenelement des Grillrostes dauerhaft befestigt.

Aus US 2002/0066373 A1 ist ein Elektrogrill bekannt, bei dem unterhalb einer Hauptkochfläche eine zusätzliche Koch- bzw. Grillebene vorgesehen ist, die aus einzelnen Rippen besteht. Grillgut kann dabei auf die Oberseite der Rippen aufgelegt werden. Zwischen den benachbarten Rippen sind jeweils Kanäle ausgebildet, die gemeinsam in einem Sammelkanal münden. Falls Fett von dem Grillgut herabtropft, rinnt das Fett durch die Kanäle in den Sammelkanal und lässt sich somit geeignet auffangen.

Der Erfindung liegt die Aufgabe zugrunde, einen Grillrost mit Fettablaufrinnenanzugeben, wobei mit einfachsten Mitteln ein Herabtropfen von Fett in die Feuerstelle verhindert und ein Abtropfen von Fett aus den Fettablaufrinnen zur Seite hin optimiert ist, bei gleichzeitig effizienter Reinigungsmöglichkeit.

Diese Aufgabe wird durch einen Grillrost mit den Merkmalen von Anspruch 1 gelöst. Vorteilhafte Weiterbildungen der Erfindung sind in den abhängigen Ansprüchen definiert.

Ein erfindungsgemäßer Grillrost umfasst einen Rahmen, auf dem eine Mehrzahl von Grillroststangen lösbar angebracht sind. Die Grillroststangen weisen eine Längserstreckung auf, wobei an beiden Seiten entlang der Längserstreckung einstückig jeweils eine Fettablaufrinne ausgebildet ist. Zumindest die Fettablaufrinnen sind gegenüber der Horizontalen geneigt angeordnet. Alternierende Grillroststangen weisen in Bezug auf ihr Querschnittsprofil jeweils eine unterschiedliche Höhe in vertikaler Richtung auf.

Der Rahmen des Grillrostes weist eine Mehrzahl von seitlich gegenüberliegenden Stützelementen auf, auf denen die Grillroststangen aufgelegt bzw. abgestützt sind. Für eine sichere Positionierung der Grillroststangen ist vorgesehen, dass diese in ihrer montierten Position von den Stützelementen durch Formschluss gehalten sind. Zweckmäßigerweise sind dabei die Stützelemente mit ihrer oberen Außenkontur jeweils komplementär zur Dachprofilform der entsprechenden Grillroststangen ausgebildet. Neben einer preiswerten Herstellbarkeit führt dies für den Benutzer zu einer einfachen Montage bzw. Demontage der Grillroststangen auf/von dem Rahmen.

An einem jeweiligen Stützelement des Rahmens ist an einer oberen Stirnseite ein Haltestift ausgebildet. An einem ersten freien Ende weisen die Grillroststangen jeweils eine Öffnung auf, die von einem jeweiligen Haltestift durchsetzt ist, so dass die Grillroststangen - wenn sie auf dem Rahmen bzw. an den Stützelementen montiert sind - in ihrer Längsachse fixiert sind. Dies verhindert wirkungsvoll ein unbeabsichtigtes Verschieben der Grillroststangen in Richtung ihrer Längsachse, wenn auch die Grillroststangen gegenüber der Horizontalen in einem Winkel geneigt sind.

Der erfindungsgemäße Grillrost hat den Vorteil, dass sich die Fettablaufrinnen einfach handhaben lassen, da sie einstückig mit den Grillroststangen ausgebildet sind. Die Neigung der Fettablaufrinnen gegenüber der Horizontalen bewirkt ein Ablaufen des darin aufgefangenen Fetts in Richtung der tiefsten Stelle der Fettablaufrinne. Indem die Grillroststangen alternierend jeweils eine unterschiedliche Höhe in vertikaler Richtung aufweisen, lassen sie sich in vertikaler Richtung überlappend benachbart zueinander positionieren. Somit ist gewährleistet, dass herabtropfendes Fett stets in einer der Fettablaufrinnen aufgefangen wird, ohne in die darunter befindliche Feuerstelle zu gelangen. Schließlich können die Grillroststangen bzw. die Fettablaufrinnen in einfachster Weise gereinigt werden, da sie von dem Rahmen demontiert werden können. In vorteilhafter Weiterbildung der Erfindung können die Grillroststangen in Form eines ersten Typs mit großer Höhe und in Form eines zweiten Typs mit kleiner Höhe ausgebildet sein. Hierbei sind die Grillroststangen vom ersten Typ jeweils benachbart zu Grillroststangen des zweiten Typs angeordnet, so dass sich der vorstehend genannte Versatz von aneinander angrenzenden Fettablaufrinnen in vertikaler Richtung ergibt. Das Vorsehen von Grillroststangen lediglich mit zwei Typen verschiedener Höhe führt vorteilhaft zu geringen Herstellungskosten und zu einer leicht verständlichen Montierbarkeit der unterschiedlichen Grillroststangen auf dem Rahmen.

In vorteilhafter Weiterbildung der Erfindung können die Stützelemente für die Grillroststangen vom zweiten Typ einen Auflagebereich in Form eines Schulterabschnitts aufweisen, auf dem die Grillroststangen vom zweiten Typ im montierten Zustand aufliegen. Dieser Schulterabschnitt ist von einem Fußabschnitt der Stützelemente für die Grillroststangen vom ersten Typ in vertikaler Richtung beabstandet. Dies führt dazu, dass die Grillroststangen vom zweiten Typ, wenn sie auf dem Rahmen bzw. dessen Stützelementen angeordnet sind, sich mit ihrer oberen Firstfläche im Wesentlichen in der gleichen Ebene befinden wie die Grillroststangen vom ersten Typ. Entsprechend resultiert hieraus eine von allen Grillroststangen gebildete im Wesentlichen ebene Fläche, auf der Grillgut oder dergleichen aufgelegt wird.

In vorteilhafter Weiterbildung der Erfindung kann ein dem ersten Ende entgegengesetztes zweites Ende der Grillroststangen jeweils frei auf dem Rahmen gelagert sein. Falls es beim Grillen durch Einwirken der Feuerstelle zu einer thermischen Ausdehnung der Grillroststangen kommt, können hierdurch hervorgerufene Längenausdehnungen der Grillroststange wegen des frei gelagerten zweiten Endes ausgleichen.

In vorteilhafter Weiterbildung der Erfindung kann im Bereich des zweiten Endes der Grillroststangen ein Niederhalter angeordnet sein, durch den eine Bewegung der Grillroststangen in vertikaler Richtung blockiert ist. Falls Grillgut an den Grillroststangen anhaften sollte, und somit beim Abheben des Grillguts die Grillroststangen unbeabsichtigt in vertikaler Richtung von dem Rähmen mit abgehoben werden, bewirkt der oberhalb der Grillroststangen angeordnete Niederhalter ein Zurückhalten der Grillroststangen. Damit der vorstehend genannte Ausgleich von thermisch bedingten Längenausdehnungen der Grillroststangen auch mit einem Niederhalter möglich ist, versteht sich, dass der Niederhalter in vertikaler Richtung geringfügig von einer Oberfläche der Grillroststangen beabstandet ist.

In vorteilhafter Weiterbildung der Erfindung kann eine Fettauffangwanne einstückig an dem Stützelement an einen Rand des Rahmens ausgebildet sein. Die Fettauffangwanne wirkt mit den Fettablaufrinnen zusammen, die mit ihrem jeweils unteren Ende oberhalb der Fettauffangwanne so positioniert sind, dass aus den Fettablaufrinnen heraus tropfendes Fett oder dergleichen in der Fettauffangwanne aufgefangen wird. Die einstückige Ausbildung der Fettauffangwanne an dem Stützelement des Rahmens erleichtert eine Handhabung des Grillrostes insbesondere bei dessen Reinigung.

In vorteilhafter Weiterbildung der Erfindung können die Grillroststangen im Wesentlichen horizontal auch dem Rahmen angeordnet sein, wobei die Fettablaufrinnen gegenüber der Horizontalen geneigt verlaufen. Dies führt dazu, dass die durch die Grillroststangen gebildete Ebene zum Auflegen von Grillgut im Wesentlichen horizontal verläuft, so dass insbesondere runde Grillgutstücke (z. B. Würstchen) nicht von den Grillroststangen seitlich herunter kullern. Die Neigung der Fettablaufrinnen gegenüber der Horizontalen bewirkt ein seitliches Ablaufen von Fett in die Fettauffangwanne.

In vorteilhafter Weiterbildung der Erfindung kann zumindest eine Fettablaufrinne an einem freien Ende der Grillroststange Mittel zum Aufbrechen der Oberflächenspannung der Fettflüssigkeit aufweisen. Dadurch wird ein Abtropfen von Fett, welches in einer Fettablaufrinne in Folge ihrer Neigung gegenüber der Horizontalen zur Seite hin abläuft, verbessert bzw. optimiert. Somit besteht ein verminderter Widerstand für die Fettflüssigkeit beim Übertreten einer Randkante der Fettablaufrinne, so dass die Fettflüssigkeit besser bzw. schneller seitlich aus der Fettablaufrinne abtropfen kann, z.B. in eine darunter befindliche Fettauffangwanne. Zweckmäßigerweise sind die Mittel zum Aufbrechen der Oberflächenspannung durch einen vergrößerten Radius der Fettablaufrinne quer zur Längsachse ausgebildet. Dies führt dazu, dass die Fettflüssigkeit eine verringerte Kontaktfläche zur Fettablaufrinne aufweist.

Alternativ oder ergänzend können die Mittel zum Aufbrechen der Oberflächenspannung an einem stirnseitigen Rand der Fettablaufrinne durch einen Radius gebildet sein, durch den sich die Fettablaufrinne in Richtung der Mitte der Grillroststange verjüngt. Es versteht sich, dass die vorstehend genannten Mittel zum Aufbrechen der Oberflächenspannung nur an einer Seite der Grillroststangen vorzusehen sind, nämlich an der Seite, die an die Fettauffangwanne angrenzt bzw. sich oberhalb dieser befindet.

In vorteilhafter Weiterbildung der Erfindung kann eine Grillroststange ein Querschnittsprofil in Form eines Dachprofils aufweisen. Dies ermöglicht eine preiswerte Herstellung der Grillroststange mit einer gleichzeitig ausreichenden Steifigkeit der Grillroststange entlang ihrer Längserstreckung. Die Grillroststange kann hierbei seitliche Schenkel aufweisen, die an ihrem unteren Ende eine jeweilige Fettablaufrinne ausbilden. Die Herstellung einer solchen Grillroststange kann durch eine geeignete Blechumformung erzielt werden, wobei die Fettablaufrinnen unmittelbar einstückig mit der Grillroststange ausgeformt werden und somit keine Nachbearbeitung erforderlich ist.

In vorteilhafter Weiterbildung der Erfindung können die Fettablaufrinnen relativ zu einer oberen Firstfläche der Grillroststangen geneigt verlaufen. Dies ermöglicht einen Wesentlichen horizontales Auflegen der Grillroststangen auf dem Rahmen, wobei dann die Fettablaufrinnen gegenüber der Horizontalen geneigt verlaufen. Wie vorstehend erläutert, ergibt sich daraus eine im Wesentlichen ebene horizontale Fläche zum Auflegen von Grillgut, wobei ein seitliches Wegführen von herabtropfendem Fett durch die Neigung der Fettablaufrinnen gewährleistet ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist nachstehend anhand einer Ausführungsform in der Zeichnung schematisch dargestellt und wird unter Bezugnahme auf die Zeichnung ausführlich beschrieben.

Es zeigen:
- Figur 1: eine perspektivische Ansicht eines erfindungsgemäßen Grillrostes,
- Figur 2: eine perspektivische Ansicht eines Rahmens des Grillrostes von Figur 1, ohne dass dabei Grillroststangen montiert sind,
- Figur 3a, 3b: jeweils perspektivische Ansichten von Grillroststangen mit unterschiedlicher Höhe in vertikaler Richtung,
- Fig. 3c: eine Drauf- und Stirnseitenansicht einer Grillroststange ersten Typs von Fig. 3a,
- Fig. 3d: eine Drauf- und Stirnseitenansicht einer Grillroststange zweiten Typs von Fig. 3b,
- Fig. 3e: eine Seitenansicht einer Grillroststange ersten Typs von Fig. 3a,
- Figur 4: eine Seitenansicht einer seitlichen Flanke des Rahmens des Grillrostes von Figur 1, mit einer Mehrzahl von Stützelementen zum Halten von Grillroststangen,
- Figur 5: eine Seitenansicht einer seitlichen Flanke des Rahmens, die einen Niederhalter aufweist,
- Figur 6: eine Teil-Seitenansicht der seitlichen Flanke gemäß Figur 4, mit darauf angebrachten Grillroststangen vom ersten und zweiten Typ,
- Figur 7: eine Teil-Seitenansicht der seitlichen Flanke gemäß Fig. 5, mit auf den Stützelementen angebrachten Grillroststangen vom ersten und zweiten Typ,
- Figur 7a: eine Teil-Seitenansicht gemäß Fig. 7, wenn zwei Grillroststangen von den Stützelementen entfernt sind,
- Figur 8: eine Stirnseitenansicht des Grillrostes in einer ersten Ausführungsform aus einer Richtung quer zur Längserstreckung der Grillroststangen,
- Fig. 9: eine Drauf- und Stirnseitenansicht einer Grillroststange ersten Typs, zur Verwendung bei einem Grillrost von Fig. 8,
- Fig. 10: eine Seitenansicht einer Grillroststange von Fig. 9,
- Figur 11: eine Stirnseitenansicht des Grillrostes in einer zweiten Ausführungsform aus einer Richtung quer zur Längserstreckung der Grillroststangen,
- Fig. 12: eine Drauf- und Stirnseitenansicht einer Grillroststange ersten Typs, zur Verwendung bei einem Grillrost von Fig. 11,
- Fig. 13: eine Seitenansicht einer Grillroststange von Fig. 12,
- Fig. 14: eine Drauf- und Stirnseitenansicht einer Grillroststange,
- Fig. 15: eine Seitenansicht der Grillroststange von Fig. 14,
- Fig. 16: eine Drauf- und Stirnseitenansicht einer Grillroststange,
- Fig. 17: eine Seitenansicht der Grillroststange von Fig. 16,
- Flg. 18: eine vereinfachte Seitenansicht eines Stützelements einer ersten seitlichen Flanke des Rahmens von Fig. 2 nach einer weiteren Ausführungsform, und
- Fig. 19-22: eine weitere Ausführungsform eines erfindungsgemäßen Grillrostes.

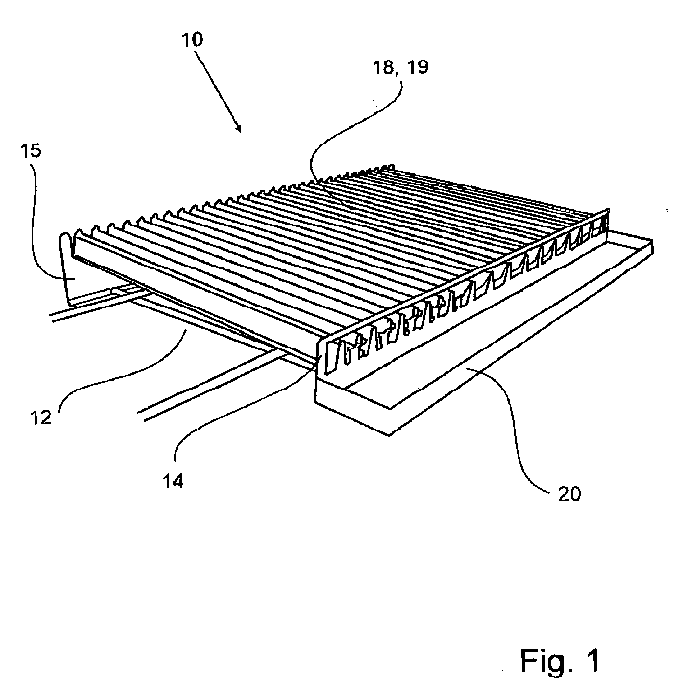

Fig. 1 zeigt eine perspektivische Darstellung eines erfindungsgemäßen Grillrostes 10. Der Grillrost 10 umfasst einen Rahmen 12 mit einander gegenüberliegenden seitlichen Flanken 14, 15, die jeweils eine Mehrzahl von Stützelementen 16 aufweisen. Auf den Stützelementen 16 der gegenüberliegenden seitlichen Flanken 14, 15 sind eine Mehrzahl von Grillroststangen 18, 19 angeordnet, was nachstehend noch im Detail erläutert ist.

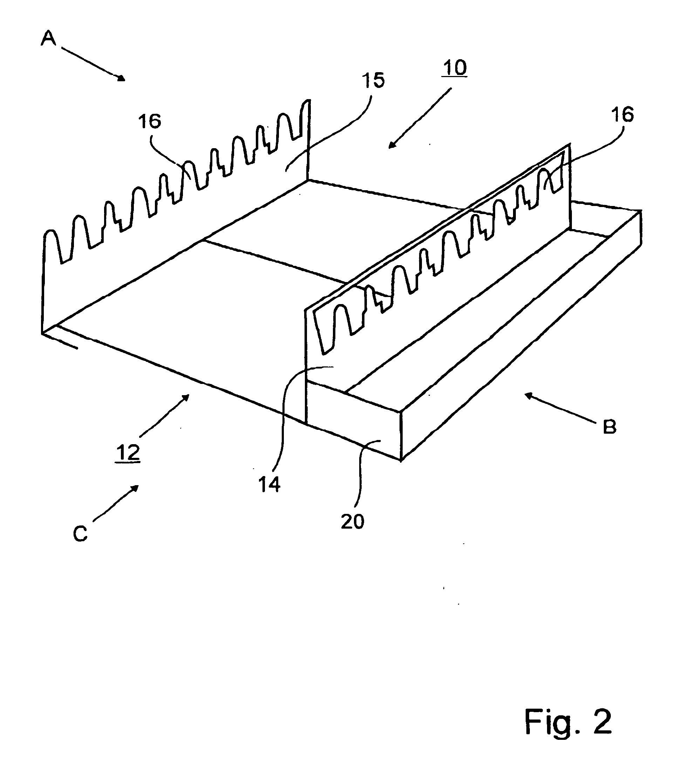

In Fig. 2 ist der Rahmen 12 ohne die Grillroststangen 18, 19 (vereinfacht) gezeigt. An einer ersten seitlichen Flanke 14 ist unterhalb der Stützelemente 16 einstückig eine Fettauffangwanne 20 ausgebildet, die im wesentlichen die gleiche Länge wie die seitliche Flanke 14 aufweist. Durch die einstückige Verbindung der Fettauffangwanne 20 mit der ersten seitlichen Flanke 14 ist die Fettauffangwanne 20 fest mit dem Rahmen 12 verbunden, was eine Handhabung für den Benutzer erleichtert.

Die Grillroststangen 18, 19 sind auf dem Rahmen 12 lösbar montiert. Anders ausgedrückt, können die Grillroststangen 18, 19 auf die Stützelemente 16 aufgelegt und auch ohne weiteres wieder davon entfernt werden. Ein Entfernen der Grillroststangen 18, 19 von dem Rahmen 12 erleichtert wesentlich die Reinigung der Grillroststangen 18, 19 als auch des Rahmens 12 bzw. der Stützelemente 16, so dass sich keine nachhaltigen Verschmutzungen oder dergleichen bilden können. Nachstehend ist erläutert, wie sich die Grillroststangen 18, 19 an den Stützelementen 16 anbringen lassen.

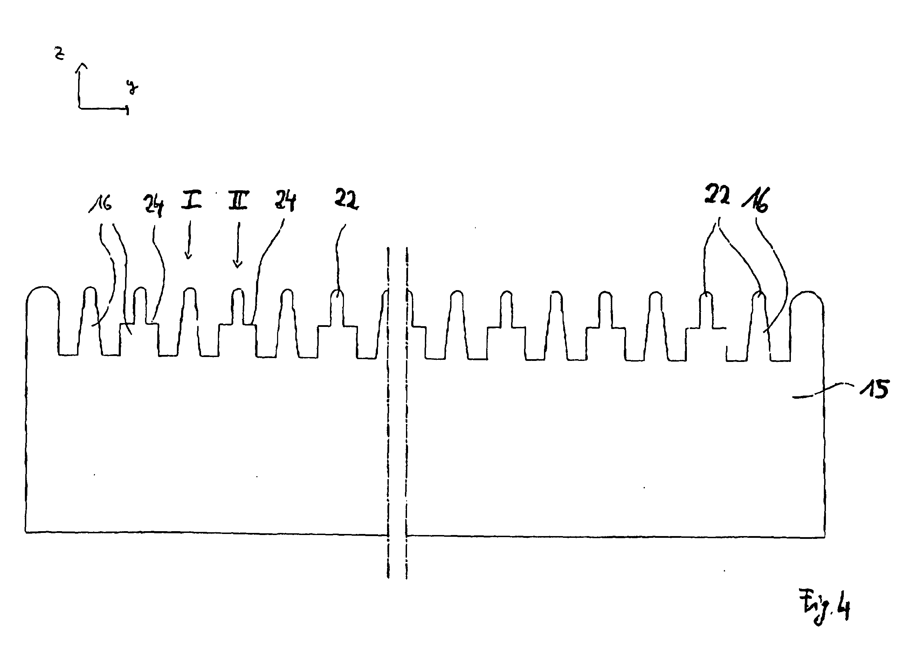

Fig. 4 zeigt eine Seitenansicht einer zweiten seitlichen Flanke 15 des Rahmens 12, die der ersten seitlichen Flanke 14 gegenüberliegt. Die Seitenansicht von Fig. 4 zeigt die zweite Flanke 15 aus Richtung des Pfeils A (vgl. Fig. 2). Entlang der Breite der zweiten seitlichen Flanke 15 sind eine Mehrzahl von Stützelementen 16 ausgebildet. Alle dieser Stützelemente 16 sind an ihrem oberen freien Ende verjüngt ausgebildet und weisen dort einen Haltestift 22 auf, dessen Funktion nachstehend noch erläutert ist. Die Stützelemente 16 sind alternierend jeweils unterschiedlich ausgebildet, wobei es insgesamt zwei verschiedene Typen von Stützelementen gibt. Ein erster Typ ist länglich schlank ausgebildet, etwa in Form eines Keils, und ist in Fig. 4 mit I bezeichnet. Ein Stützelement 16 vom zweiten Typ, in Fig. 4 mit II bezeichnet, weist einen Schulterabschnitt 24 auf, der im Wesentlichen rechtwinklig ausgebildet ist. Der Schulterabschnitt 24 der Stützelemente vom zweiten Typ II ist in vertikaler Richtung z von einem Fußabschnitt 26 der daran angrenzenden Stützelemente vom ersten Typ I beabstandet.

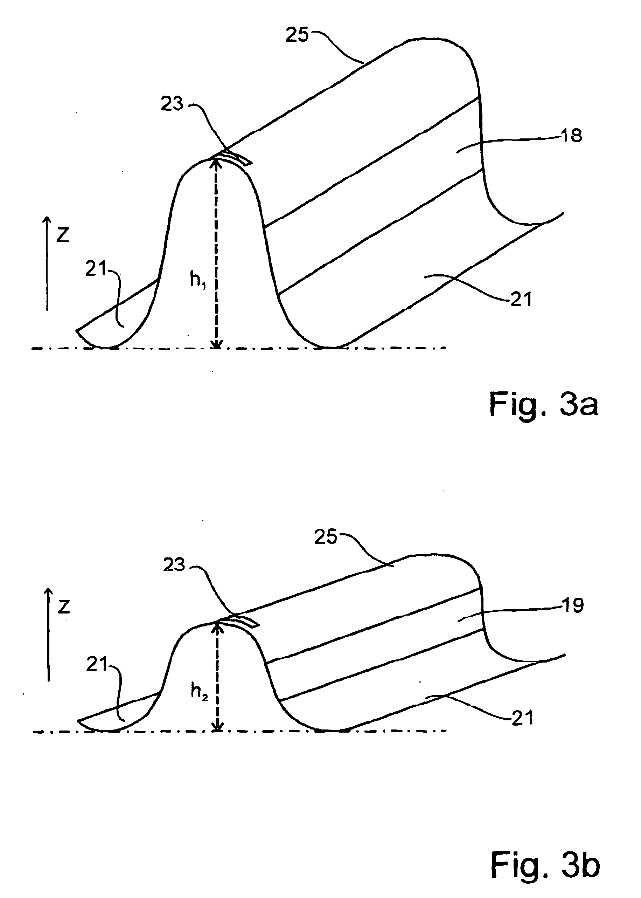

Für den Grillrost 10 kommen zwei verschiedene Typen von Grillroststangen zum Einsatz. Fig. 3a zeigt eine Teil-Perspektivansicht einer Grillroststange 18 eines ersten Typs, die in vertikaler Richtung z eine vergleichsweise große Höhe h₁ aufweist. Fig. 3b zeigt eine Teil-Perspektivansicht einer Grillroststange 19 eines zweiten Typs, die in vertikaler Richtung z eine relativ kleine Höhe h₂ aufweist. Im Vergleich der beiden verschiedenen Typen von Grillroststangen gemäß Fig. 3a und Fig. 3b gilt die Beziehung: h₁ > h₂. Anders ausgedrückt, ist eine so genannte Dachhöhe der Grillroststange 18 vom ersten Typ größer als die Dachhöhe der Grillroststange 19 vom zweiten Typ.

Beide Typen der Grillroststangen 18, 19 weisen eine Längserstreckung auf, wobei an beiden Seiten entlang der Längserstreckung einstückig jeweils eine Fettablaufrinne 21 ausgebildet ist. Anders ausgedrückt, umfasst jede der Grillroststangen 18, 19 jeweils zwei Fettablaufrinnen 21, die seitlich entlang der Grillroststangen 18, 19 verlaufen. Des Weiteren ist an jeder Grillroststange angrenzend an eine Stirnseite im Bereich ihrer oberen Firstfläche 25 jeweils eine Öffnung 23 ausgebildet.

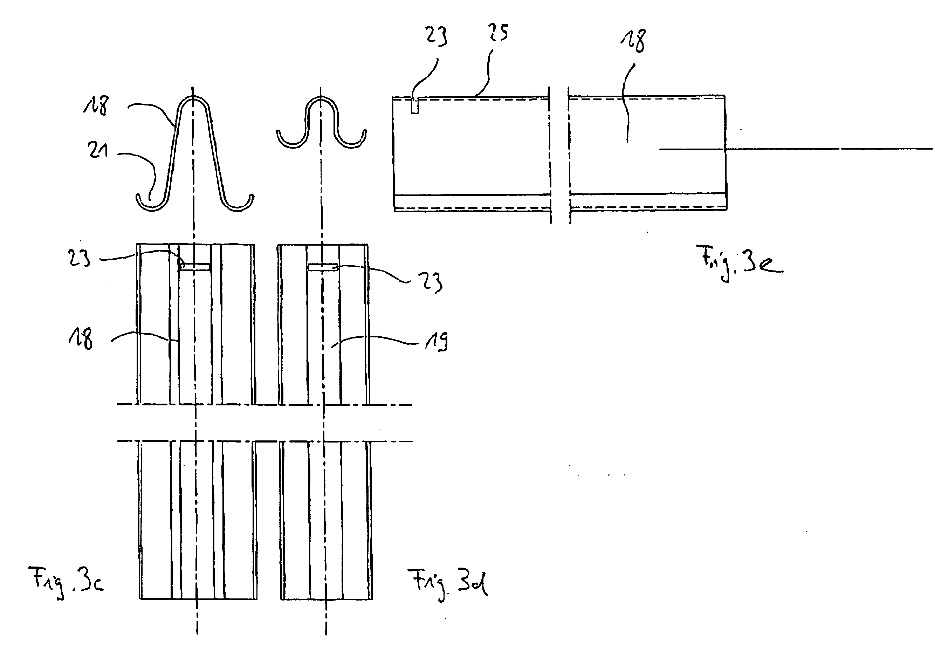

Fig. 3c zeigt eine Grillroststange 18 vom ersten Typ in einer Draufsicht und in einer Stirnseitenansicht, wobei Fig. 3e diese Grillroststange in einer seitlichen Ansicht darstellt. Die seitlichen Schenkel der Grillroststange 18 formen an ihren unteren Abschnitten die jeweiligen Fettablaufrinnen 21 aus. In der oberen Firstfläche 25 ist die Öffnung 23 ausgebildet, in Form eines Durchgangslochs.

Fig. 3d zeigt eine Grillroststange 19 vom zweiten Typ in einer Draufsicht und in einer Stirnseitenansicht. Die Grillroststange 19 entspricht von ihrem Aufbau identisch der Grillroststange 18, mit dem Unterschied, dass ihre Höhe h₂ kleiner ist und entsprechend die seitlichen Schenkel kürzer sind.

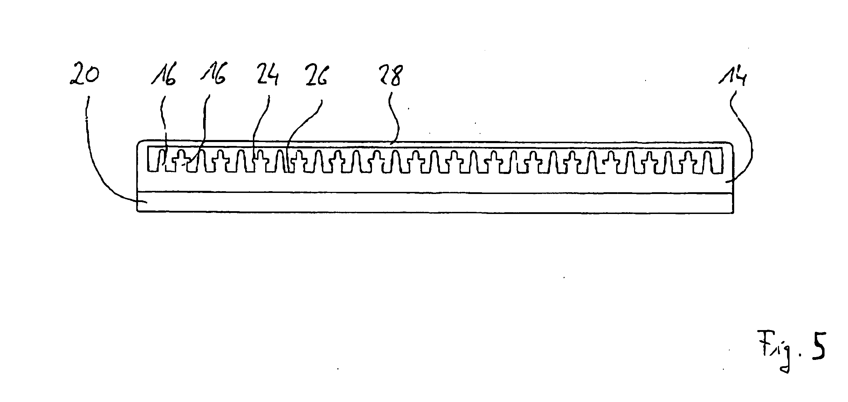

Fig. 5 zeigt eine Seitenansicht der ersten seitlichen Flanke 14 des Rahmens 12, nämlich aus Richtung des Pfeils B (vgl. Fig. 2). Es ist zu erkennen, dass die erste seitliche Flanke 14 in gleicher Weise wie die zweite seitliche Flanke 15 eine Mehrzahl von Stützelementen 16 aufweist. Von Bedeutung ist, dass die seitlich Beabstandung dieser Stützelemente 16 zueinander bei beiden Seitenflanken 14, 15 identisch ist. Die Stützelemente, die an der ersten seitlichen Flanke 14 ausgebildet sind, sind in gleicher Weise wie bei der zweiten seitlichen Flanke 15 (Fig. 4) von einem ersten bzw. zweiten Typ. Dies bedeutet, dass alternierend jedes zweite Stützelement 16 einen Schulterabschnitt 24 aufweist, der vertikal von einem Fußabschnitt 26 der benachbarten Stützelemente beabstandet ist. Des Weiteren ist an der ersten seitlichen Flanke 14 ein sog. Niederhalter 28 als ein Rahmenprofil ausgebildet, das oberhalb der Stützelemente 16 entlang einer vollständigen Breite der ersten seitlichen Flanke 14 verläuft.

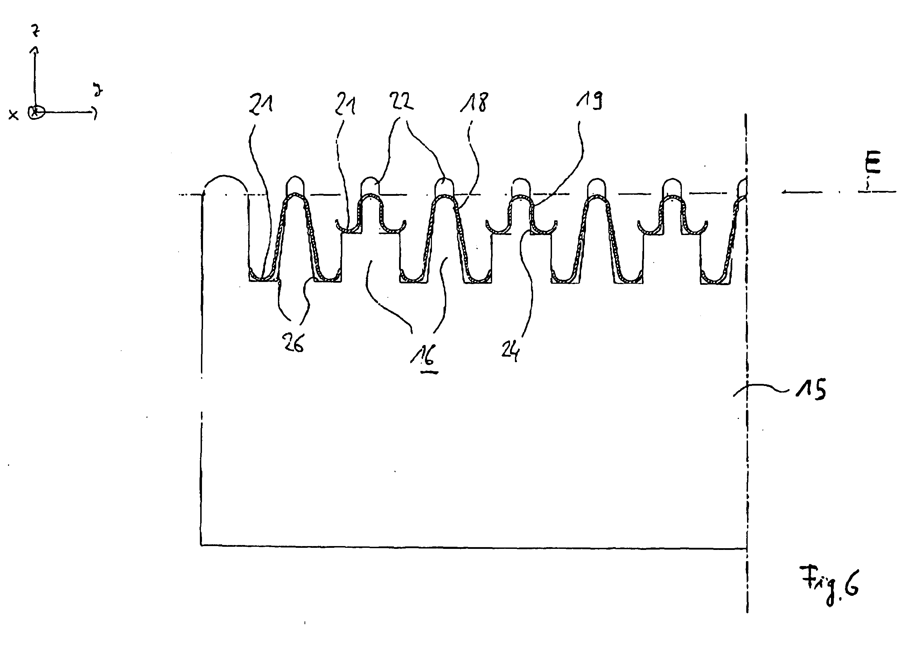

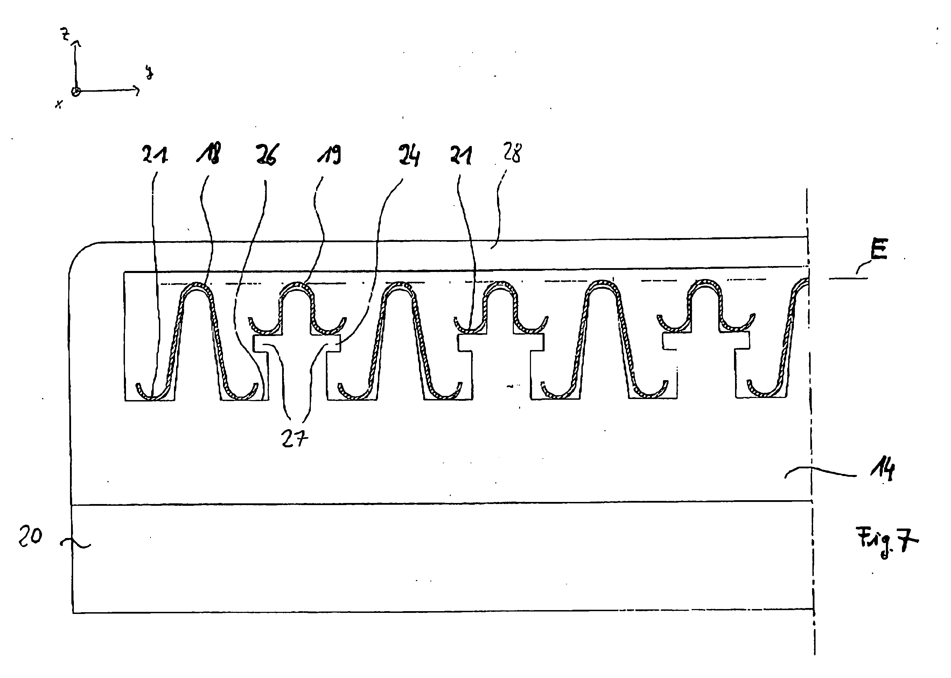

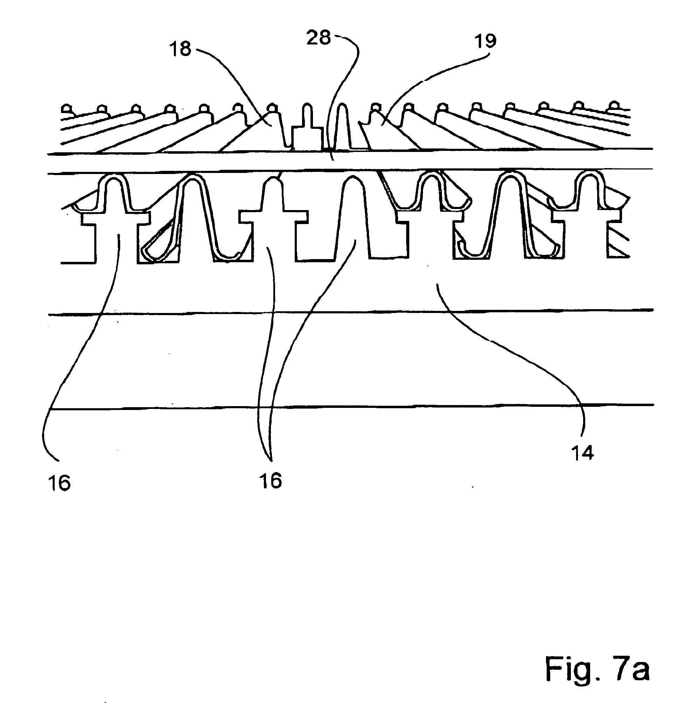

Die Ausgestaltung der Außenkontur der Stützelemente 16 ist dahingehend zu verstehen, dass diese im Wesentlichen komplementär zur Dachprofilform der Grillroststangen 18, 19 ausgebildet ist. Dies bedeutet, dass sich die Grillroststangen 18, 19 von oben auf die jeweiligen Stützelemente 16 aufbringen lassen. Fig. 6 bzw. Fig. 7 zeigen einen Teil-Seitenansicht der zweiten bzw. ersten seitlichen Flanke 15/14, wenn die Grillroststangen 18, 19 auf die jeweiligen Stützelemente 16 aufgesetzt sind. Zum besseren Verständnis ist in diesen Figuren ein kartesisches Koordinatensystem mit den Achsen x, y, z gezeigt. Die Grillroststangen verlaufen mit ihrer Längsachse in Richtung der Achse x, und sind seitlich voneinander in y-Richtung beabstandet. Eine vertikale Höhe der Grillroststangen verläuft in Richtung der z-Achse.

Die Wechselwirkung zwischen der Außenkontur der Stützelemente 16 und der Dachprofilform der Grillroststangen 18, 19 führt dazu, dass die Grillroststangen nach dem Prinzip des Formschlusses in einer Richtung quer zu ihrer Längsachse (y-Richtung, vgl. Fig. 6) auf den Stützelementen 16 fixiert sind. Hierbei definiert der seitliche Abstand der jeweiligen Stützelemente 16 zueinander die Beabstandung der Grillroststangen 18, 19. Das Eingreifen der Haltestifte 22, die an den Stützelementen 16 der zweiten seitlichen Flanke 15 ausgebildet sind, in die Öffnungen 23 der Grillroststangen 18, 19 führt zu einer Fixierung der Grillroststangen 18, 19 bezüglich ihrer Längsachse (x-Richtung), ebenfalls nach dem Prinzip des Formschlusses. Falls die Öffnung 23 in ihrer Breite geringfügig kleiner bemessen ist als eine Breite der Haltestifte 22, so sind die Grillroststangen an diesem freien Ende ebenfalls in vertikaler Richtung (z-Richtung, vgl. Fig. 6) fixiert, in Folge der Reibung zwischen Haltestift und Öffnung. Es versteht sich, dass das Übermaß des Haltestifts 22 in Bezug auf eine Weite der Öffnung 22 gerade nur so viel beträgt, dass ein manuelles Aufsetzen der Grillroststangen 18, 19 auf einen jeweiligen Haltestift 22 und ein Abnehmen hiervon ohne Weiteres möglich ist.

Die Grillroststange 18 vom ersten Typ I stützt sich mit ihren beiden seitlichen Schenkeln in den Fußabschnitten 26 ab, die zwischen den Stützelementen 16 ausgebildet sind. Die Grillroststangen 19 vom zweiten Typ II sind angrenzend zu den Grillroststangen 18 vom ersten Typ auf den Stützelementen 16 aufgebracht, die die Schulterabschnitte 24 aufweisen. Hierbei liegen die seitlichen Schenkel der Grillroststange 19 vom zweiten Typ mit ihrer unteren Fläche auf einem jeweiligen Schulterabschnitt 24 der entsprechenden Stützelemente 16 auf. Mittels des Schulterabschnitts 24, auf dem die Grillroststangen 19 vom zweiten Typ aufliegen, wird deren kleinere Höhe h₂ in vertikaler Richtung im Vergleich zur Höhe h₁ der Grillroststangen 18 vom ersten Typ I ausgeglichen. Im Ergebnis grenzen alle Grillroststangen 18, 19 mit ihrer oberen Firstfläche an eine gemeinsame Ebene E (vgl. Fig. 6) an. Hierdurch wird eine ebene Auflagefläche für Grillgut gewährleistet.

Fig. 7 zeigt eine Teil-Seitenansicht der ersten seitlichen Flanke 14 (aus Sicht des Pfeils B, vgl. Fig. 2), wenn wie vorstehend erläutert die Grillroststangen 18, 19 auf die Stützelemente 16 aufgelegt sind. In montiertem Zustand der Grillroststangen 18, 19 befindet sich der Niederhalter 28 oberhalb eines Randbereichs der Grillroststangen 18, 19. Entsprechend ist eine Bewegung der Grillroststangen 18, 19 in vertikaler Richtung (z) nach oben eingeschränkt, sobald die Grillroststangen 18, 19 mit ihrer jeweiligen oberen Firstfläche gegen den Niederhalter 28 stoßen. Der Niederhalter 28 erfüllt somit den Zweck, dass sich die Grillroststangen 18, 19 beim Entfernen von daran anhaftendem Grillgut nicht unbeabsichtigt von den Stützelementen 16 bzw. von dem Rahmen 12 gleichzeitig mit ablösen. Ein Spalt zwischen einem jeweiligen oberen Rand der Stützelemente 16 und einer unteren Kante des Niederhalters 28 ist dabei geeignet so bemessen, dass einerseits ein Einfädeln der Grillroststangen 18, 19 in diesen Spalt hinein ohne weiteres möglich ist, und andererseits ein Abheben der Grillroststangen 18, 19 von den Stützelementen 16 in vertikaler Richtung nach oben auf ein Minimum reduziert wird, wenn daran anhaftendes Grillgut entfernt wird. Der Niederhalter 28 bewirkt somit einen Formschluss für die Grillroststangen 18, 19 bezüglich der Stützelemente 16 in vertikaler Richtung.

Die Schulterabschnitte 24 der Stützelemente 12, die an der ersten seitlichen Flanke 14 ausgebildet sind, weisen eine T-förmige Abkragung 27 auf, deren seitliche Enden sich in Richtung benachbarter Stützelemente 12 erstrecken. Die seitlichen freien Enden dieser Abkragung 27 überlappen ein unteres freies Ende der seitlichen Schenkel einer jeweiligen Grillroststange 18 vom ersten Typ in vertikaler Richtung (y-Richtung). Dies führt dazu, dass die Grillroststangen 18 vom ersten Typ in einer Bewegung in vertikaler Richtung nach oben blockiert sind. Sollte es beim Grillen und insbesondere beim Abheben von Grillgut von dem Grillrost dazu kommen, dass die Grillroststangen 18 durch den Niederhalter 28 nicht ausreichend in vertikaler Richtung blockiert werden, so wird die gewünschte Blockadewirkung für die Grillroststangen 18 dann durch die Abkragung 27 erfüllt.

Die unterschiedliche Dachhöhe h₁ bzw. h₂ der jeweiligen Grillroststangen 18, 19 ermöglicht eine Positionierung auf dem Rahmen 12 bzw. den Stützelementen 16 in der Weise, dass die Fettablaufrinnen 21 bezüglich der Vertikalen (z-Richtung, vgl. Fig. 7) zueinander versetzt angeordnet sind. Dies führt dazu, dass beim Grillen herabtropfendes Fett stets von einer der Fettablaufrinnen 21 aufgefangen wird. Dies verhindert wirkungsvoll ein Herabtropfen des Fetts in die Feuerstelle und somit ein schädliches Verbrennen des Fetts mit entsprechend unerwünschten Dämpfen. In den Ansichten gemäß Fig. 6 und Fig. 7 ist dieser seitliche Versatz der Fettablaufrinnen 21 in vertikaler Richtung deutlich zu erkennen. Infolge der unterschiedlichen Dachhöhe der Grillroststangen 18, 19 ist es auch mit dem erläuterten seitlichen Versatz in Bezug auf die Fettablaufrinnen 21 möglich, dass die Grillroststangen 18, 19 mit ihrer oberen Firstfläche gemeinsam an die Ebene E angrenzen, was zu einer ebenen Auflagefläche für Grillgut führt.

Fig. 7a zeigt nochmals eine Teil-Seitenansicht der ersten seitlichen Flanke 14, aus Richtung des Pfeils B von Fig. 2. Zur Verdeutlichung des Prinzips der komplementären Ausbildung der Stützelemente 16 in Bezug auf die Dachprofilform der Grillroststangen 18, 19 sind zur Vereinfachung in einem mittigen Bereich der seitlichen Flanke 14 zwei Grillroststangen ausgelassen bzw. entfernt. Beim Aufbringen der Grillroststangen 18, 19 werden diese mit ihrem freien Ende unterhalb des Niederhalters 28 geeignet eingefädelt, wobei anschließend die jeweiligen entgegengesetzten freien Enden auf die Stützelemente 16 der zweiten seitlichen Flanke 15 aufgebracht werden. Hierbei durchsetzen dann die Haltestifte 22 die Öffnungen 23 und rasten in diesen ein.

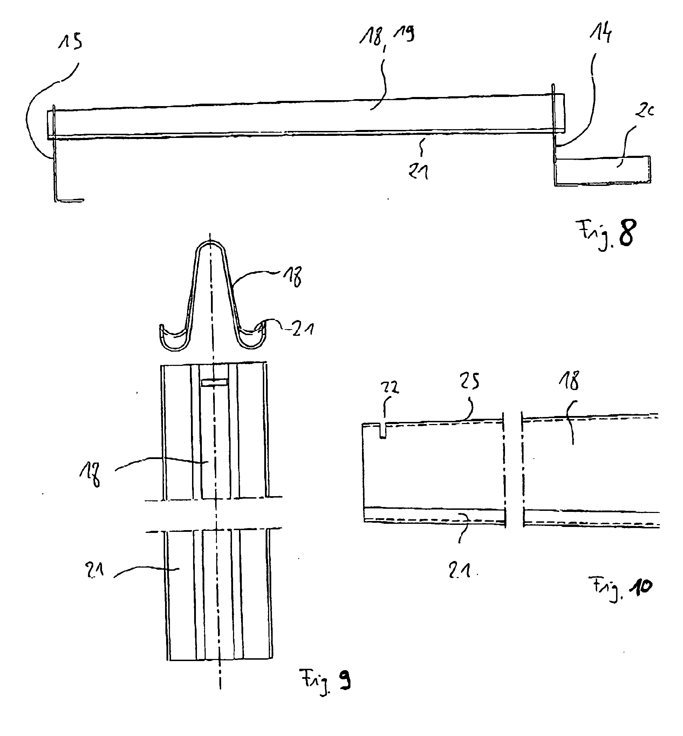

Fig. 8 zeigt eine seitliche Ansicht des Grillrostes 10 aus Richtung des Pfeils C (vgl. Fig. 2). Es ist zu erkennen, dass die Grillroststangen 18, 19 derart auf dem Rahmen 12 angebracht sind, dass sie im Wesentlichen horizontal verlaufen. Gleichwohl sind dabei die Fettablaufrinnen 21 gegenüber der Horizontalen geneigt, wobei deren untere freie Enden oberhalb der Fettablaufwanne 20 angeordnet sind. Die Neigung der Fettablaufrinnen 21 gegenüber der Horizontalen führt dazu, dass das darin aufgefangene Fett seitlich abläuft und entsprechend in die Fettablaufwanne 20 abtropft. Die soeben erläuterte horizontale Anbringung der Grillroststangen 18, 19 auf dem Rahmen 12 bei gleichzeitiger Neigung der Fettablaufrinnen gegenüber der Horizontalen wird dadurch erreicht, dass die Fettablaufrinnen 21 relativ zu einer oberen Firstfläche 25 der zugehörigen Grillroststange 18, 19 geneigt verlaufen. Entsprechend wird dadurch eine Neigung der Fettablaufnnnen 21 auch dann erzielt, wenn diese einstückig mit den Grillroststangen 18, 19 ausgebildet sind.

Fig. 9 zeigt eine Drauf- und eine Stirnseitenansicht einer Grillroststange 18 voran ersten Typ, die bei der Ausführungsform von Fig. 8 zum Einsatz kommt. Fig. 10 zeigt eine Seitenansicht dieser Grillroststange. Wie erläutert, verläuft die Fettablaufrinne 21 an beiden Seiten der Grillroststange 18 geneigt gegenüber ihrer oberen Firstfläche 25. Es versteht sich, dass die Grillroststangen 19 vom zweiten Typ identisch ausgebildet sind, mit dem Unterschied einer kleineren Höhe in vertikaler Richtung.

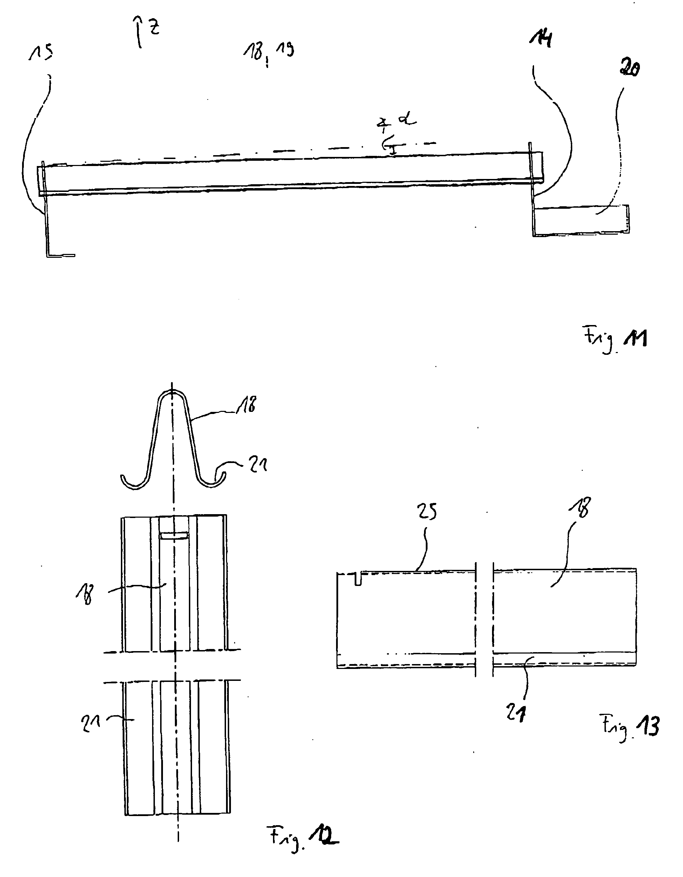

Fig. 11 zeigt eine alternative Ausführungsform eines Grillrostes 10, in Form einer Seitenansicht aus Richtung des Pfeils C (vgl. Fig. 2). Die Grillroststangen 18, 19 sind bei dieser Ausführungsform des Grillrostes 10 derart ausgebildet sind, dass ihre Fettablaufrinnen 21 im Wesentlichen parallel zur oberen Firstfläche 25 verlaufen. In Fig. 13 ist dies für die Grillroststange 18 vom ersten Typ zu erkennen, wobei die Grillroststange 19 diesbezüglich in gleicher Weise strukturiert ist. Die zweite seitliche Flanke 15 des Rahmens 12 ist höher (bzw. länger in vertikaler Richtung z) als dessen erste seitliche Flanke 14. Dies führt dazu, dass die Grillroststangen 18, 19 und die Fettablaufrinnen 21 in gleicher Weise gegenüber der Horizontalen geneigt angeordnet, so dass sie mit der Horizontalen einen Winkel α einschliessen. Eine solche Ausführungsform der Grillroststangen 18, 19 lässt sich preiswerter herstellen als die Grillroststangen gemäß der Ausführungsform von Fig. 8.

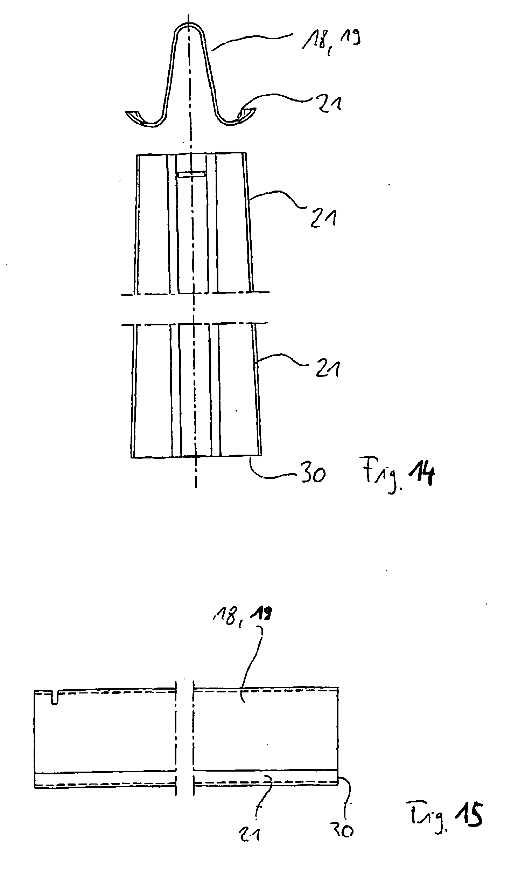

Fig. 14-17 zeigen Varianten bezüglich der Grillroststange 18, 19, bei der ein seitliches Abtropfen von Fett aus der Fettabtaufrinne 21 optimiert ist. Dies wird durch Mittel erreicht, wodurch die Oberflächenspannung der Fettflüssigkeit aufgebrochen wird. Es versteht sich, dass beide Typen von Grillroststangen 18, 19 gemäß der in den Fig. 14-18 gezeigten Ausführungsform ausgebildet sein können.

Die in Fig. 14 gezeigte Grillroststange zeichnet sich dadurch aus, dass die Fettablaufrinnen 21 einen vergrößerten Radius quer zur Längsachse der Grillroststange aufweisen. Anders ausgedrückt, nimmt der Radius der Fettablaufrinnen 21 stetig in Richtung eines freien Endes der Grillroststange zu. Hieraus resultiert eine verminderte Kontaktfläche zwischen einer jeweiligen Fettablaufrinne 21 und dem darin befindlichen Fett in Richtung dieses freien Endes, wodurch die Oberflächenspannung der Fettflüssigkeit vermindert wird. Ergebnis ist ein erleichtertes Abtropfen des Fetts von einer Randkante 30 der Fettablaufrinne 21. In der Seitenansicht von Fig. 15 ist die Randkante 30 an einem freien Ende der Grillroststange zu erkennen.

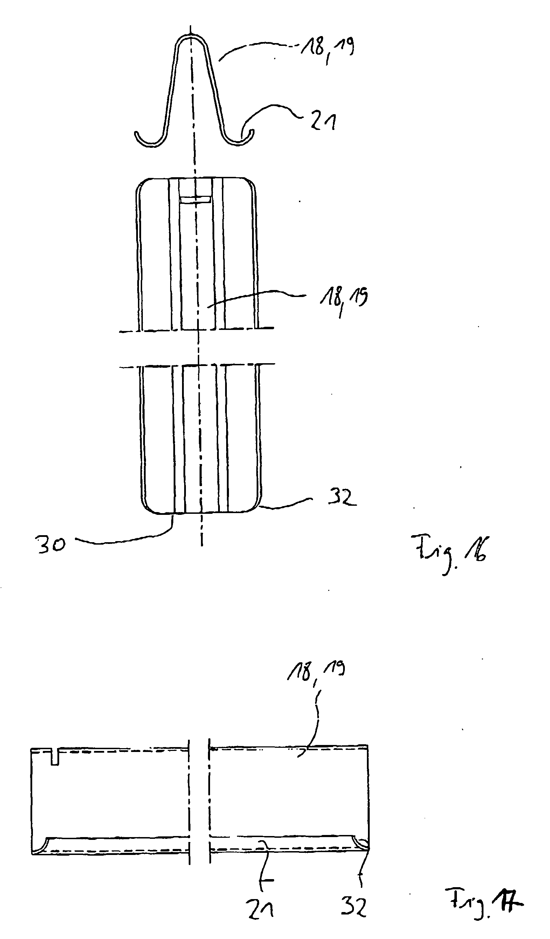

Fig. 16 zeigt eine weitere Ausführungsform einer Grillroststange, nämlich in einer Draufsicht und einer Stirnseitenansicht. Die Mittel zum Aufbrechen der Oberflächenspannung ist bei dieser Variante durch einen Radius 32 gebildet, durch den sich die Fettablaufrinne 21 an einem stirnseitigen Rand in Richtung der Mitte der Grillroststange 18, 19 verjüngt. Dies bewirkt ebenfalls ein optimiertes Abtropfen der Fettflüssigkeit über den Randabschnitt 30 der Fettablaufrinne 21. In Fig. 17 ist dieser sich verjüngende Radius 32 in einer Seitenansicht der Grillroststange 18, 19 zu erkennen.

Es versteht sich, dass der vergrößerte Radius der Fettablaufrinne 21 quer zur Längsachse bzw. der Radius 32 in Richtung der Mitte der Grillroststange jeweils an dem freien Ende der Grillroststangen 18, 19 vorgesehen sind, das sich oberhalb der Fettauffangwanne 20 befindet. Entsprechend ist ein Abtropfen der Fettflüssigkeit von einem Randabschnitt 30 der Fettablaufrinnen 21 in die Fettauffangwanne 20 gewährleistet.

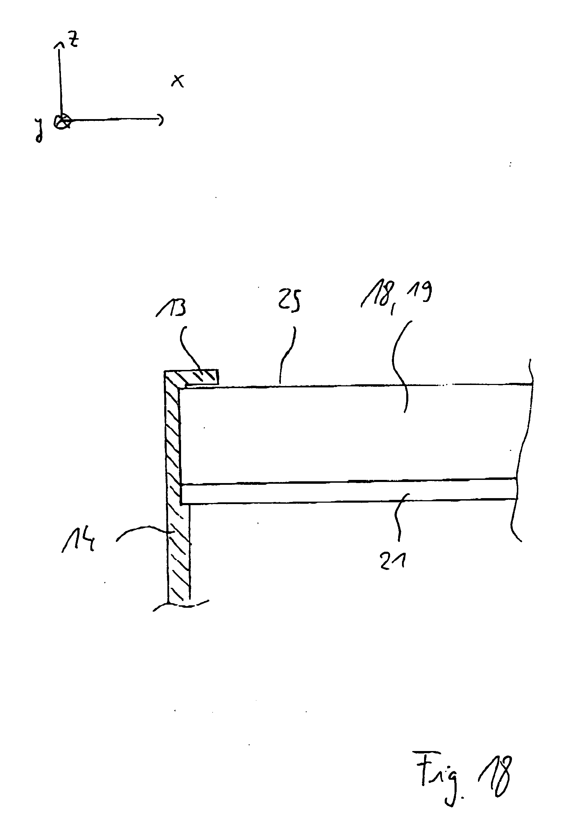

Fig. 18 zeigt eine seitliche Ansicht einer weiteren Ausführungsform eines Stützelements 12 an der ersten seitlichen Flanke 14 (schraffiert dargestellt). Bei dieser Ausführungsform ist der vorstehend genannte Niederhalter 28 in Form eines Rahmenprofils ausgelassen. Statt dessen sind die oberen freien Enden 13 der Stützelemente 12 in einem Winkel von im Wesentlichen 90° in Richtung der gegenüberliegenden zweiten Flanke 15 des Rahmens 12 umgeformt. Hierbei greifen diese freien Enden 13 um die jeweiligen Stirnseiten der montierten Grillroststangen 18, 19 herum und erstrecken sich oberhalb von deren oberen Firstflächen 25. In gleicher Weise wie durch den Niederhalter 28 ist hierdurch eine Bewegung der Grillroststangen 18, 19 in vertikaler Richtung (y-Richtung) blockiert und somit ein unbeabsichtigtes Abheben der Grillroststangen 18, 19 nach oben von den Stützelementen 12 der ersten seitlichen Flanke 14 nicht möglich. Es versteht sich, dass die oberen freien Enden 13 der Stützelemente 12 auch in einem kleineren Winkel als 90° in Richtung der zweiten seitlichen Flanke 15 umgeformt sein können, sofern dadurch ein Abheben der Grillroststangen 18, 19 verhindert wird, wie vorstehend erläutert.

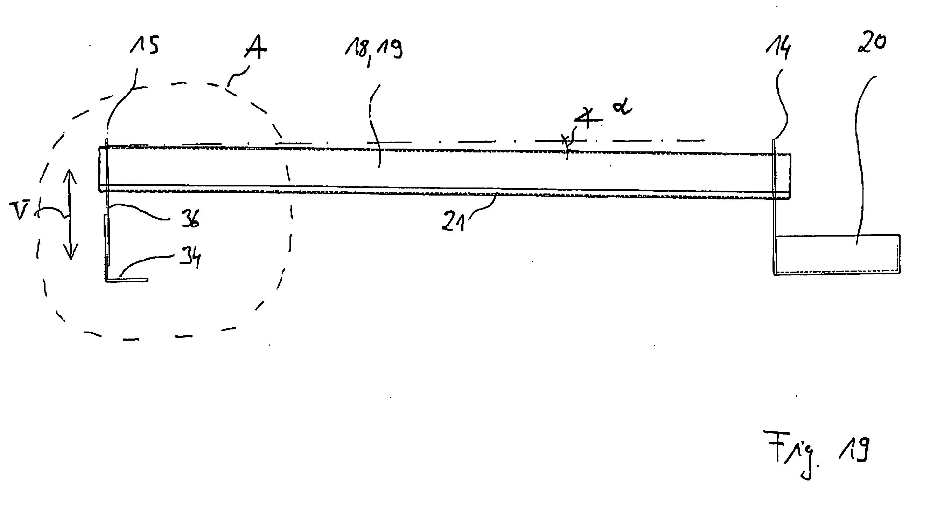

In den Figuren 19-22 ist eine weitere Ausführungsform des Grillrostes 10 gezeigt, mit der ein verbessertes Ableiten von Fett möglich ist, das von Grillgut bzw. Grillfleisch auf die Grillroststangen 18, 19 herabgetropft. Hierzu kann die Neigung der Grillroststangen 18, 19 bezüglich einer Horizontalen verändert werden. Nachstehend ist dies im Detail erläutert.

Figur 19 zeigt den Grillrost 10 in einer Seitenansicht. Die zweite seitliche Flanke 15 ist aus zwei Teilen gebildet, nämlich aus einem unteren Basiselement 34 und einer oberen Stützleiste 36.

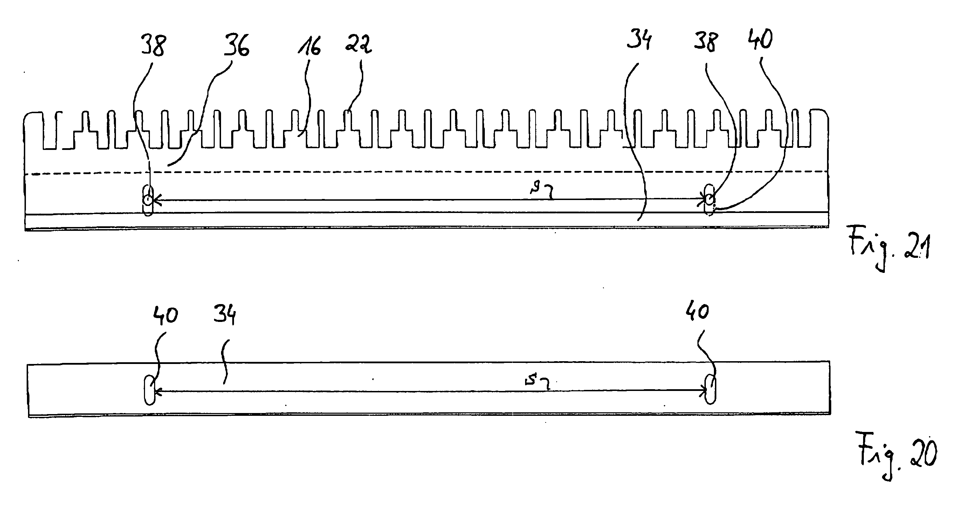

Figur 20 zeigt eine Seitenansicht des Basiselements 34. Das Basiselement 34 ist über (nicht gezeigte) geeignete Querverstrebungen mit der ersten seitlichen Flanke 14 verbunden. Das Basiselement 34 weist in seiner Wandung zwei vertikale Langlöcher 40 auf. Die vertikalen Langlöcher 40 sind voneinander um einen Abstand s beabstandet.

Figur 21 zeigt eine Seitenansicht der Stützleiste 36. In gleicher Weise wie bei der zweiten seitlichen Flanke 15 gemäß Figur 4 sind bei der Stützleiste 36 an deren oberen Rand eine Mehrzahl von Stützelementen 16 mit Haltestiften 22 ausgebildet. Bezüglich der Ausgestaltung des oberen Rands der Stützleiste 36 wird zur Vermeidung von Wiederholungen wird auf die Erläuterung von Figur 4 verwiesen.

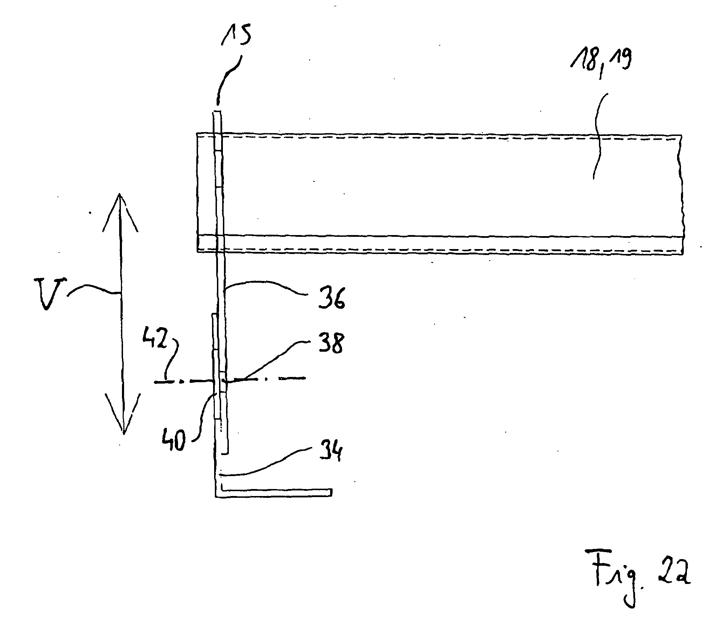

Die Stützleiste 36 weist in ihrer Wandung zwei Bohrungen 38 auf, die um den gleichen Abstand s wie die vertikalen Langlöcher 40 voneinander beabstandet sind. Die Stützleiste 36 ist zur Befestigung an dem Basiselement 34 orgesehen. In der Seitenansicht von Fig. 21 ist dies der Fall, wobei das Basiselement 34 hinter der Stützleiste angeordnet ist. Entsprechend sind die Langlöcher 40 des Basiselements 34 in Fig. 21 verdeckt und durch gestrichelte Linien gezeigt. Die Befestigung der Stützleiste 36 an dem Basiselement 34 ist im Detail in Fig. 22 gezeigt, die den Bereich A von Fig. 19 vergrößert darstellt.

Die Stützleiste 36 wird an dem Basiselement 34 durch eine Schraubverbindung oder vergleichbare Befestigungsmittel dergleichen gehalten, die jeweils in den Bohrungen 38 und den vertikalen Langlöchern 40 vorgesehen ist. Eine Schraube oder dergleichen kann hierzu durch eine Bohrung 38 und ein vertikales Langloch 40 gesteckt werden, wobei eine solche Schraube in Fig. 22 symbolisch durch eine strichpunktierte Linie 42 angedeutet ist. Die Schraubverbindung umfasst neben der Schraube eine (nicht gezeigte) Mutter, die mit der Schraube in bekannter Weise verschraubbar ist. Die Schraube kann zweckmäβigerweise als Flügelmutter ausgebildet sein, die sich einfach von Hand feststellen lässt. Somit ist für eine Bedienperson ein Festziehen bzw. Lösen der Verschraubung von Hand, ohne die Verwendung von separatem Werkzeug, möglich.

Falls die Verschraubung gelöst ist, kann die Stützleiste 36 relativ zu dem Basiselement 34 in seiner Höhe vertikal verstellt werden, dank des vertikalen Langlochs 40. Diese Verstellbarkeit der Stützleiste ist in der Fig. 22 durch den Pfeil V angedeutet. Durch Festziehen der Verschraubung wird die Stützleiste 36 in einer gewünschten vertikalen Position festgelegt. Falls die Stützleiste 36 auf eine gleiche Höhe wie die erste seitliche Flanke 14 eingestellt ist, verlaufen die Grillroststangen 18, 19 im Wesentlichen horizontal. Wenn die Stützleiste 36 relativ zum Basiselement 34 nach oben verstellt wird, können die Stützleiste 36 mit ihrem oberen Rand, und somit die Stützelemente 16, in Bezug auf eine Horizontale höher als die Stützelemente 16 der ersten seitlichen Flanke 14 positioniert sein. Entsprechend sind für diesen Fall die Grillroststangen 18, 19 gegenüber der Horizontalen geneigt, was in Fig. 19 durch den Winkel α kenntlich gemacht ist. Je größer diese Neigung der Grillroststangen 18, 19 in Richtung der Fettablaufwanne 20 ist, desto mehr ist hierdurch ein Ablaufen bzw. Abtropfen des Fetts, welches sich in den Fettablaufrinnen 21 befindet, gefördert. In dieser Weise kann die Neigung der Grillroststangen 18, 19 an die Art des Grillfleisches im Hinblick auf seinen Fett- und Saftgehalt angepasst werden. Die maximale Verstellbarkeit der Stützleiste 36 vertikal nach oben ist durch die Länge der vertikalen Langlöcher 40 definiert.

Alternativ zu den Darstellungen von Figur 20, 21 ist es auch möglich, dass die vertikalen Langlöcher 40 in der Wandung der Stützleiste 36 ausgebildet sind, wobei die Bohrungen 38 dann in der Wandung des Basiselements 34 ausgebildet sind. Des Weiteren ist es möglich, dass nicht die zweite seitliche Flanke 15, sondern die erste seitliche Flanke 14 zweiteilig aus einem Basiselement und einer Stützleiste ausgebildet ist, mit der gleichen vertikalen Verstellbarkeit wie vorstehend erläutert.

## Patentansprüche

1. Grillrost (10), umfassend
einen Rahmen (12),
eine Mehrzahl von Grillroststangen (18, 19) mit einer Längserstreckung, die lösbar an dem Rahmen (12) angebracht sind, wobei an zumindest einer Seite der Grillroststangen (18, 19) entlang der Längserstreckung einstückig eine Fettablaufrinne (21) ausgebildet ist und zumindest die Fettablaufrinne (21) gegenüber der Horizontalen geneigt angeordnet ist, **dadurch gekennzeichnet,**
**dass** an beiden Seiten der Grillroststangen (18, 19) entlang der Längserstreckung einstückig jeweils eine Fettablaufrinne (21) ausgebildet ist, wobei zumindest die Fettablaufrinnen (21) gegenüber der Horizontalen geneigt angeordnet sind,
**dass** alternierende Grillroststangen (18, 19) in Bezug auf ihr Querschnittsprofil jeweils eine unterschiedliche Höhe (h₁, h₂) in vertikaler Richtung aufweisen,
**dass** der Rahmen eine Mehrzahl von seitlich gegenüberliegenden Stützelementen (16) umfasst, auf denen die Grillroststangen (18, 19) aufgelegt bzw. abgestützt sind, wobei die Stützelemente (16) mit ihrer oberen Aussenkontur jeweils komplementär zur Dachprofilform der entsprechenden Grillroststangen (18, 19) ausgebildet sind, und
**dass** die Grillroststangen (18, 19) an einem ersten freien Ende eine Öffnung (23) aufweisen, die von einem an einem jeweiligen Stützelement (16) ausgebildeten Haltestift (22) durchsetzt ist, so dass die Grillroststangen (18, 19) in ihrer Längsachse fixiert sind.

2. Grillrost (10) nach Anspruch 1, **dadurch gekennzeichnet, dass** die Grillroststangen in Form eines ersten Typs mit großer Höhe (h₁) und in Form eines zweiten Typs mit kleiner Höhe (h₂) ausgebildet sind, wobei die Grillroststangen vom ersten Typ jeweils benachbart zu Grillroststangen vom zweiten Typ angeordnet sind und aneinander angrenzende Fettablaufrinnen (21) von benachbarten Grillroststangen sich in vertikaler Richtung überlappen.

3. Grillrost (10) nach Anspruch 2, **dadurch gekennzeichnet, dass** die Stützelemente (16) für die Grillroststangen vom zweiten Typ einen Auflagebereich in Form eines Schulterabschnitts (24) aufweisen, auf dem die Grillroststangen (19) vom zweiten Typ im montierten Zustand aufliegen, wobei der Schulterabschnitt (24) von einem Fußabschnitt (26) der Stützelemente (16) für die Grillroststangen vom ersten Typ in vertikaler Richtung beabstandet ist.

4. Grillrost (10) nach einem der Ansprüche 1 bis 3, **dadurch gekennzeichnet, dass** ein dem ersten Ende entgegengesetztes zweites Ende der Grillroststangen (18, 19) frei gelagert ist.

5. Grillrost (10) nach Anspruch 4, **dadurch gekennzeichnet, dass** im Bereich des zweiten Endes der Grillroststangen (18, 19) ein Niederhalteelement (13, 20) angeordnet ist, das eine Bewegung der Grillroststangen (18, 19) in vertikaler Richtung (z) blockiert.

6. Grillrost (10) nach einem der vorhergehenden Ansprüche, **dadurch gekennzeichnet, dass** an dem Stützelement (16) an einer seitlichen Flanke (14) des Rahmens (12) einstückig eine Fettauffangwanne (20) ausgebildet ist.

7. Grillrost (10) nach einem der vorhergehenden Ansprüche, **dadurch gekennzeichnet, dass** die Grillroststangen (18, 19) im Wesentlichen horizontal und die Fettablaufrinnen (21) gegenüber der Horizontalen geneigt verlaufen, wobei die Grillroststangen (18, 19) mit ihrer oberen Firstfläche (25) in einer gemeinsame Ebene (E) angeordnet sind.

8. Grillrost (10) nach einem der vorhergehenden Ansprüche, **dadurch gekennzeichnet, dass** die Grillroststangen (18, 19) in ihrer Neigung gegenüber der Horizontalen veränderbar sind, indem ein Teil (36) des Rahmens , auf dem die Grillroststangen aufliegen, in vertikaler Richtung höhenverstellbar ist.

9. Grillrost (10) nach einem der vorhergehenden Ansprüche, **dadurch gekennzeichnet, dass** zumindest eine Fettablaufrinne (21) an einem freien Ende der Grillroststange Mittel zum Aufbrechen der Oberflächenspannung von Fettflüssigkeit oder dergleichen aufweist.

10. Grillrost (10) nach Anspruch 9, **dadurch gekennzeichnet, dass** die Mittel zum Aufbrechen der Oberflächenspannung durch einen vergrößerten Radius der Fettablaufrinne (21) quer zur Längsachse ausgebildet sind.

11. Grillrost (10) nach Anspruch 9 oder 10, **dadurch gekennzeichnet, dass** die Mittel zum Aufbrechen der Oberflächenspannung an einem stirnseitigen Rand der Fettablaufrinne (21) durch einen Radius (32) gebildet sind, durch den sich die Fettablaufrinne (21) in Richtung der Mitte der Grillroststange verjüngt.

12. Grillrost (10) nach einem der Ansprüche 9 bis 11, **dadurch gekennzeichnet, dass** ein Querschnittsprofil der Grillroststange (18,19) in Form eines Dachprofils ausgebildet ist, wobei die Grillroststange (18,19) in Bezug auf ihr Querschnittsprofil seitliche Schenkel aufweist, die an ihrem unteren Ende die Fettablaufrinnen (21) ausbilden, wobei die Fettablaufrinnen (21) relativ zu einer oberen Firstfläche (25) der Grillroststange (18,19) geneigt verlaufen.

## Claims

1. Barbecue grate (10), comprising
a frame (12),
a plurality of barbecue grate bars (18, 19) with a longitudinal extent which are detachably fitted to the frame (12), wherein a fat run-off channel (21) is integrally formed on at least one side of the barbecue grate bars (18, 19) along the longitudinal extent, and at least the fat run-off channel (21) is arranged such that it is inclined in relation to the horizontal, **characterized**
**in that** a fat run-off channel (21) is integrally formed on both sides of the barbecue grate bars (18, 19) along the longitudinal extent, respectively, wherein at least the fat run-off channels (21) are arranged such that they are inclined in relation to the horizontal,
**in that** alternating barbecue grate bars (18, 19) have a different height (h₁, h₂) in the vertical direction in respect of their cross-sectional profile, respectively,
**in that** the frame comprises a plurality of laterally opposing supporting elements (16) on which the barbecue grate bars (18, 19) are placed or supported, wherein the supporting elements (16) are formed so that the upper outer contour complements the roof profile shape of the corresponding barbecue grate bars (18, 19), respectively, and
**in that** the barbecue grate bars (18, 19) have an opening (23) at a first free end, a holding pin (22) which is formed on a respective supporting element (16) passing through the said opening, with the result that the barbecue grate bars (18, 19) are fixed in respect of their longitudinal axis.

2. Barbecue grate (10) according to Claim 1, **characterized in that** the barbecue grate bars are formed in the form of a first type with a large height (h₁) and in the form of a second type with a small height (h₂), wherein the barbecue grate bars of the first type are respectively arranged adjacent to barbecue grate bars of the second type, and fat run-off channels (21), which adjoin one another, of adjacent barbecue grate bars overlap in the vertical direction.

3. Barbecue grate (10) according to Claim 2, **characterized in that** the supporting elements (16) for the barbecue grate bars of the second type have a bearing region in the form of a shoulder section (24) on which the barbecue grate bars (19) of the second type rest in the fitted state, wherein the shoulder section (24) is spaced apart from a base section (26) of the supporting elements (16) for the barbecue grate bars of the first type in the vertical direction.

4. Barbecue grate (10) according to one of Claims 1 to 3, **characterized in that** a second end, which is opposite the first end, of the barbecue grate bars (18, 19) is freely supported.

5. Barbecue grate (10) according to Claim 4, **characterized in that** a holding-down element (13, 20) is arranged in the region of the second end of the barbecue grate bars (18, 19), the said holding-down element blocking movement of the barbecue grate bars (18, 19) in the vertical direction (z).

6. Barbecue grate (10) according to one of the preceding claims, **characterized in that** a fat collection tray (20) is integrally formed on the supporting element (16) on a lateral flank (14) of the frame (12).

7. Barbecue grate (10) according to one of the preceding claims, **characterized in that** the barbecue grate bars (18, 19) run substantially horizontal and the fat run-off channels (21) run such that they are inclined in relation to the horizontal, wherein the barbecue grate bars (18, 19) are arranged with their upper top surface (25) in a common plane (E).

8. Barbecue grate (10) according to one of the preceding claims, **characterized in that** the inclination of the barbecue grate bars (18, 19) in relation to the horizontal can be changed by the height of a portion (36) of the frame, on which the barbecue grate bars rest, being adjusted in the vertical direction.

9. Barbecue grate (10) according to one of the preceding claims, **characterized in that** at least one fat run-off channel (21) has means for breaking the surface tension of liquid fat or the like at a free end of the barbecue grate bar.

10. Barbecue grate (10) according to Claim 9, **characterized in that** the means for breaking the surface tension are formed by an enlarged radius of the fat run-off channel (21) transverse to the longitudinal axis.

11. Barbecue grate (10) according to Claim 9 or 10, **characterized in that** the means for breaking the surface tension are formed at an end edge of the fat run-off channel (21) by a radius (32) by virtue of which the fat run-off channel (21) tapers in the direction of the centre of the barbecue grate bar.

12. Barbecue grate (10) according to one of Claims 9 to 11, **characterized in that** a cross-sectional profile of the barbecue grate bar (18, 19) is designed in the form of a roof profile, wherein the barbecue grate bar (18, 19) has lateral limbs with respect to its cross-sectional profile, the said limbs forming the fat run-off channels (21) at their lower ends, wherein the fat run-off channels (21) run such that they are inclined relative to an upper top surface (25) of the barbecue grate bar (18, 19).

## Revendications

1. Gril (10), comprenant
un cadre (12),
une pluralité de barreaux de gril (18, 19) avec une extension longitudinale, qui sont posés de façon amovible sur le cadre (12), dans lequel une rigole d'évacuation de graisse (21) est formée d'une seule pièce sur au moins un côté des barreaux de gril (18, 19) le long de l'extension longitudinale et au moins la rigole d'évacuation de graisse (21) est inclinée par rapport à l'horizontale, **caractérisé en ce que**
une rigole d'évacuation de graisse (21) est formée d'une seule pièce respectivement sur les deux côtés des barreaux de gril (18, 19) le long de l'extension longitudinale, dans lequel au moins les rigoles d'évacuation de graisse (21) sont inclinées par rapport à l'horizontale,
des barreaux de gril alternés (18, 19) présentent, par rapport à leur profil de section transversale, chaque fois une hauteur différente (h₁, h₂) en direction verticale,
le cadre comprend une pluralité d'éléments de support (16) latéralement opposés, sur lesquels les barreaux de gril (18, 19) sont posés ou supportés, dans lequel les éléments de support (16) sont respectivement formés avec un contour extérieur complémentaire à la forme du profil de toit des barreaux de gril correspondants (18, 19), et
les barreaux de gril (18, 19) présentent à une première extrémité libre une ouverture (23), qui est traversée par une patte de maintien (22) formée sur un élément de support respectif (16), de telle manière que les barreaux de gril (18, 19) soient fixés selon leur axe longitudinal.

2. Gril (10) selon la revendication 1, **caractérisé en ce que** les barreaux de gril sont réalisés sous forme d'un premier type avec une grande hauteur (h₁) et sous forme d'un deuxième type avec une petite hauteur (h₂), dans lequel les barreaux de gril du premier type sont respectivement disposés à proximité de barreaux du deuxième type et des rigoles d'évacuation de graisse (21) adjacentes l'une à l'autre de barreaux de gril voisins se recouvrent en direction verticale.

3. Gril (10) selon la revendication 2, **caractérisé en ce que** les éléments de support (16) pour les barreaux de gril du deuxième type présentent une zone d'appui sous la forme d'une partie en épaulement (24), sur laquelle les barreaux de gril (19) du deuxième type reposent à l'état monté, dans lequel la partie en épaulement (24) est espacée en direction verticale d'une partie de pied (26) des éléments de support (16) pour les barreaux de gril du premier type.

4. Gril (10) selon l'une des revendications 1 à 3, **caractérisé en ce qu'**une deuxième extrémité des barreaux de gril (18, 19) opposée à la première extrémité est posée librement.

5. Gril (10) selon la revendication 4, **caractérisé en ce qu'**un élément de blocage (13, 20), qui bloque un mouvement des barreaux de gril (18, 19) en direction verticale (z), est disposé dans la région de la deuxième extrémité des barreaux de gril (18, 19).

6. Gril (10) selon l'une quelconque des revendications précédentes, **caractérisé en ce qu'**une cuvette de collecte de graisse (20) est formée d'une seule pièce sur l'élément de support (16) sur un flanc latéral (14) du cadre (12).

7. Gril (10) selon l'une quelconque des revendications précédentes, **caractérisé en ce que** les barreaux de gril (18, 19) s'étendent essentiellement à l'horizontale et les rigoles d'évacuation de graisse (21) sont inclinées par rapport à l'horizontale, dans lequel les barreaux de gril (18, 19) ont leurs faces de crête supérieures (25) disposées dans un plan commun (E).

8. Gril (10) selon l'une quelconque des revendications précédentes, **caractérisé en ce que** les barreaux de gril (18, 19) peuvent être modifiés au niveau de leur inclinaison par rapport à l'horizontale, du fait qu'une partie (36) du cadre, sur laquelle les barreaux de gril reposent, est réglable en hauteur en direction verticale.

9. Gril (10) selon l'une quelconque des revendications précédentes, **caractérisé en ce qu'**au moins une rigole d'évacuation de graisse (21) présente à une extrémité libre du barreau de gril des moyens pour rompre la tension superficielle de la graisse liquide ou analogue.

10. Gril (10) selon la revendication 9, **caractérisé en ce que** les moyens pour rompre la tension superficielle sont formés par un rayon accru de la rigole d'évacuation de graisse (21) transversalement à l'axe longitudinal.

11. Gril (10) selon la revendication 9 ou 10, **caractérisé en ce que** les moyens pour rompre la tension superficielle sont formés sur un bord frontal de la rigole d'évacuation de graisse (21) par un rayon (32) par lequel la rigole d'évacuation de graisse (21) se rétrécit en direction du milieu du barreau de gril.

12. Gril (10) selon l'une des revendications 9 à 11, **caractérisé en ce qu'**un profil de section transversale du barreau de gril (18, 19) est réalisé sous forme d'un profil de toit, dans lequel le barreau de gril (18, 19) présente, par rapport à son profil de section transversale, deux branches latérales, qui forment les rigoles d'évacuation de graisse (21) à leur extrémité inférieure, dans lequel les rigoles d'évacuation de graisse (21) sont inclinées par rapport à une face de crête supérieure (25) du barreau de gril (18, 19).
